# EUROPÄISCHE PATENTSCHRIFT

(11) **EP 2 989 358 B1**
(45) Veröffentlichungstag und Bekanntmachung des Hinweises auf die Patenterteilung: **10.05.2017**
(21) Anmeldenummer: 14711491.2
(22) Anmeldetag: 18.03.2014
(51) Int. Cl.: F16J 15/34

(54) **GLEITRINGDICHTUNG MIT POSITIONSGENAUER BANDAGE**
SLIDE RING SEAL WITH ACCURATELY POSITIONED BINDING
SYSTÈME D'ÉTANCHÉITÉ À BAGUES DE GLISSEMENT ET BANDAGE EN POSITION PRÉCISE

(30) Priorität: 24.04.2013 DE 102013007163
(43) Veröffentlichungstag der Anmeldung: 02.03.2016
(73) Patentinhaber: EagleBurgmann Germany GmbH & Co. KG, 82515 Wolfratshausen (DE)
(72) Erfinder: JOHANNES, Rolf, 82515 Wolfratshausen (DE); SVEJKOVSKY, Reinhard, 82438 Eschenlohe (DE); SCHULTEN, Berthold, 82538 Geretsried (DE); POCHMANN, Ernst, 82431 Kochel am See (DE)
(74) Vertreter: Hoefer & Partner Patentanwälte mbB
(86) Internationale Anmeldenummer: PCT/EP2014/055377
(87) Internationale Veröffentlichungsnummer: WO 2014/173587

(56) Entgegenhaltungen:
- EP-A1- 0 163 450
- EP-A2- 0 327 845

## Beschreibung

Die vorliegende Erfindung betrifft eine Gleitringdichtungsanordnung mit einem Gleitring, welcher eine positionsgenau angeordnete Bandage aufweist.

Gleitringdichtungsanordnungen sind aus dem Stand der Technik in unterschiedlichen Ausgestaltungen bekannt. Bei hochbelasteten Gleitringen kann hierbei eine Bandage vorgesehen werden, welche einen Außenumfang des Gleitrings umgibt. (Siehe zB EP-A-0163450 oder EP-A-0327845). Die Bandage kann beispielsweise mittels Schrumpfen oder dgl, auf den Gleitring aufgebracht werden. Durch den Schrumpfvorgang kann es allerdings vorkommen, dass die Bandage nicht sehr positionsgenau auf dem Gleitring angeordnet ist. Hierdurch können sich im Betrieb, insbesondere, wenn die Bandage am rotierenden Gleitring angeordnet ist, Probleme durch Unwuchten oder ungleichförmige thermische Verformungen und dgl. ergeben.

Dies kann zu einem übermäßigen Verschleiß, zu hoher Leckage und einem vorzeitigen Ausfall der Gleitringdichtungsanordnung führen.

Es ist daher Aufgabe der vorliegenden Erfindung, eine Gleitringdichtungsanordnung bereitzustellen, welche bei einfachem Aufbau und einfacher, kostengünstiger Herstellbarkeit eine exakte Positionierung einer Bandage an einem Gleitring ermöglicht.

Diese Aufgabe wird durch eine Gleitringdichtungsanordnung mit den Merkmalen des Anspruchs 1 gelöst. Die Unteransprüche haben bevorzugte Weiterbildungen der Erfindung zum Gegenstand.

Die erfindungsgemäße Gleitringdichtungsanordnung mit den Merkmalen des Anspruchs 1 umfasst einen rotierenden und einen stationären Gleitring, welche zwischen sich einen Dichtspalt begrenzen. Wenigstens eine Bandage ist ferner vorgesehen, welche auf einer äußeren Umfangsfläche wenigstens eines der Gleitringe angeordnet ist. Die Bandage übt dabei eine radial nach innen gerichtete Kraft auf den Gleitring aus. Der Gleitring, an welchem die Bandage angeordnet ist, weist ferner eine auf der Außenumfangsfläche vollständig in Umfangsrichtung verlaufende Stufe mit einer Anlagefläche auf. Die Bandage ist dabei derart an der Außenumfangsfläche angeordnet, dass die Bandage mit einer Stirnseite an der Anlagefläche der Stufe des Gleitrings anliegt. Hierdurch kann die Bandage auf einfache Weise immer an die Anlagefläche angelegt werden, so dass die Anlagefläche beim Montagevorgang der Bandage als Anschlag dient und die Bandage immer gleich positioniert werden kann. Die Stufe an der Außenumfangsfläche des Gleitrings verhindert auch bei einem Schrumpfvorgang eine unerwünschte Bewegung der Bandage, so dass die Bandage mit höchster Positionsgenauigkeit auf der Außenumfangsfläche des Gleitrings angeordnet ist.

Weiter bevorzugt weist die Bandage an der ersten Stirnseite, welche an der Anlagefläche der Stufe am Gleitring anliegt, eine Fase an einer radial inneren Kante auf. Dadurch wird verhindert, dass die Bandage bei der Montage gegebenenfalls mit einer inneren Kante gegen den Gleitring drückt und diesen beschädigt.

Vorzugsweise ist die Bandage am rotierenden Gleitring angeordnet. Hierdurch können Unwuchten oder ungleichförmige thermische Verformungen am rotierenden Gleitring, die im Stand der Technik durch eine fehlerhafte Positionierung der Bandage auftreten können, vermieden werden.

Weiter bevorzugt übergreift ein Halter die Bandage zumindest teilweise. Besonders bevorzugt übergreift der Halter sowohl die Bandage als auch den Gleitring. Hierbei befindet sich der Halter sowohl mit der Außenumfangsfläche der Bandage als auch mit der freiliegenden Außenumfangsfläche des Gleitrings in Kontakt. Der Halter dient hierbei insbesondere zur Drehung und Übertragung eines Drehmoments einer Welle.

Gemäß einer weiter bevorzugten Ausgestaltung der vorliegenden Erfindung ist eine Breite der Bandage in Axialrichtung der Gleitringdichtungsanordnung mindestens so groß wie die Hälfte einer Breite des Gleitrings in Axialrichtung. Besonders bevorzugt weist die Bandage eine Breite von ca. 0,5 bis 0,8 mal der Breite des Gleitrings in Axialrichtung auf.

Weiter bevorzugt ist eine Dicke des Gleitrings im Bereich der Bandage mindestens das 5-fache einer Dicke der Bandage.
Eine besonders kostengünstige Herstellung ist möglich, wenn die Anlagefläche der Stufe am Gleitring senkrecht zur Längsachse der Gleitringdichtungsanordnung verläuft.

Besonders bevorzugt ist dabei eine Dicke der Bandage gleich oder größer als eine Tiefe der Stufe am Gleitring. Bei gleicher Dicke und Tiefe bilden die äußere Umfangsfläche der Bandage und die freiliegende Außenumfangsfläche des Gleitrings eine im Wesentlichen zylindrische Fläche. Wenn die Bandage dicker als die Tiefe ist, steht die Bandage vom Gleitring radial vor. Dadurch kann ein Halter nur an der Bandage angreifen und berührt den Gleitring nicht.

Besonders bevorzugt weist der Gleitring genau eine Stufe an seinem Außenumfangsbereich auf. Dadurch wird ein besonders einfacher Aufbau von Gleitring und Bandage erreicht.

Weiter bevorzugt umfasst die Gleitringdichtungsanordnung ferner eine erste und eine zweite Bandage. Die zweite Bandage ist dabei an einer äußeren Mantelfläche der ersten Bandage angeordnet. Dadurch ist es möglich, zwei Bandagen mit unterschiedlichen Eigenschaften bereitzustellen. Beispielsweise kann die äußere Bandage eine hohe chemische Beständigkeit gegen ein abzudichtendes Medium aufweisen und somit die innere Bandage schützen. Die innere Bandage kann dagegen beispielsweise eine hohe mechanische Festigkeit aufweisen. Besonders bevorzugt sind genau zwei Bandagen vorgesehen, welche in Radialrichtung unmittelbar übereinander angeordnet sind.

Besonders bevorzugt ist am Gleitring eine erste Anlagefläche für die erste Bandage und eine zweite Anlagefläche für die zweite Bandage vorgesehen. Dadurch können beide Bandagen exakt am Gleitring positioniert werden.

Weiter bevorzugt sind an einer Stufe zwei Bandage vorgesehen.

Weiter bevorzugt überdeckt die zweite Bandage die erste Bandage an ihrer Außenmantelfläche vollständig. Hierdurch kann beispielsweise ein Schutz gegen chemisch aggressive Medien durch die zweite Bandage bereitgestellt werden.

Weiter bevorzugt wird die zweite Bandage zumindest teilweise von einem Halter übergriffen. Hierdurch kann eine sichere Positionierung des Gleitrings mit den beiden Bandagen erfolgen und ferner kann über den Halter auch eine Drehmomenteinleitung über die Bandagen auf den Gleitring erfolgen.

Weiter bevorzugt ist die Bandage über einem Flächenschwerpunkt des Gleitrings angeordnet, wobei der Flächenschwerpunkt durch einen Schnitt in Richtung der Längsachse des Gleitrings bestimmt wird.

Die vorliegende erfindungsgemäße Gleitringdichtungsanordnung wird besonders bevorzugt in Verbindung mit Pumpen verwendet.

Nachfolgend werden bevorzugte Ausführungsbeispiele der Erfindung unter Bezugnahme auf die begleitende Zeichnung im Detail beschrieben. In der Zeichnung sind dabei gleiche bzw. funktional gleiche Teile mit den gleichen Bezugszeichen bezeichnet. In der Zeichnung ist:
- Fig. 1: eine schematische, teilweise geschnittene, perspektivische Ansicht einer Gleitringdichtungsanordnung gemäß einem ersten Ausführungsbeispiel der Erfindung,
- Fig. 2: eine schematische, vergrößerte Schnittansicht des rotierenden Gleitrings mit Bandage von Fig. 1,
- Fig. 3: eine schematische, vergrößerte Schnittansicht eines rotierenden Gleitrings gemäß einem zweiten Ausführungsbeispiel der Erfindung, und
- Fig. 4: eine schematische, vergrößerte Schnittansicht eines rotierenden Gleitrings gemäß einem dritten Ausführungsbeispiel der Erfindung.

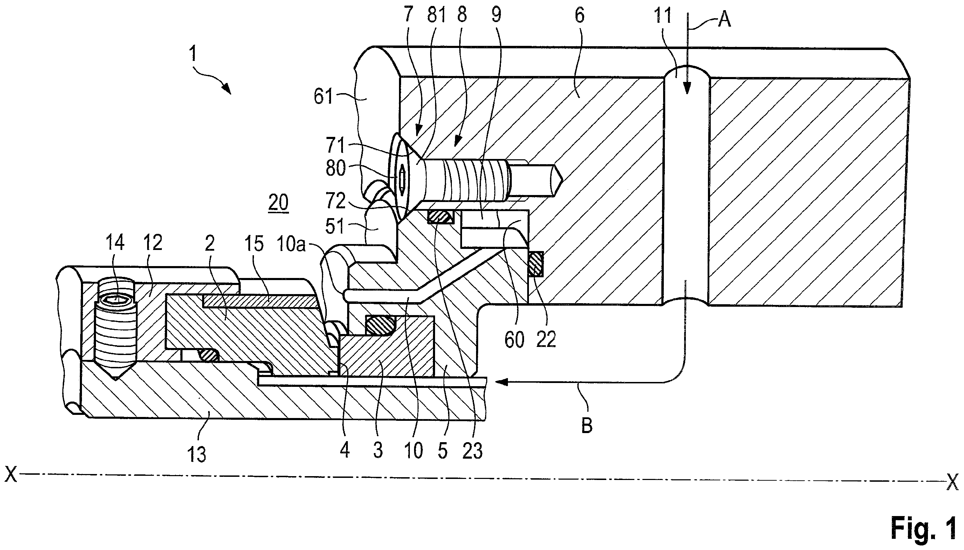

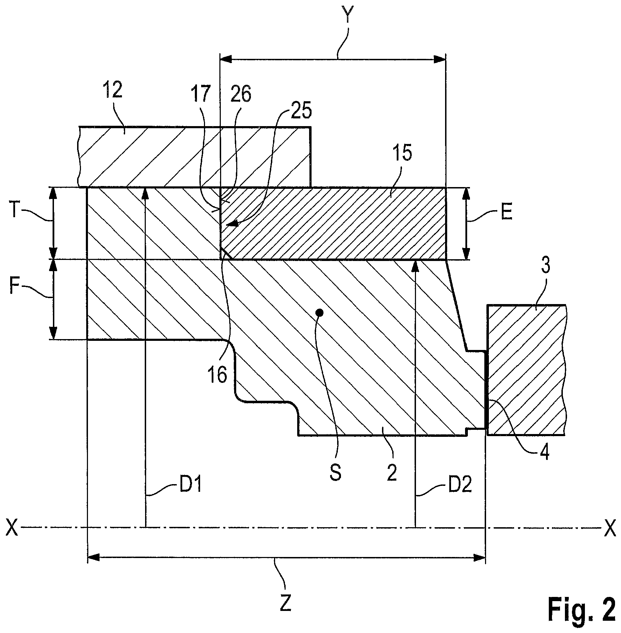

Nachfolgend wird unter Bezugnahme auf die Fig. 1 und 2 eine Gleitringdichtungsanordnung 1 gemäß einem ersten Ausführungsbeispiel der Erfindung im Detail beschrieben.

Wie aus Fig. 1 ersichtlich ist, umfasst die erfindungsgemäße Gleitringdichtungsanordnung 1 einen rotierenden Gleitring 2 und einen stationären Gleitring 3, welche zwischen sich in bekannter Weise einen Dichtspalt 4 begrenzen. Der rotierende Gleitring 2 weist dabei an seinem äußeren Umfang eine Bandage 15 auf, wobei eine Rotation einer nicht gezeigten Welle von der Welle auf eine Wellenhülse 13 und von der Wellenhülse 13 auf einen mittels Verbindungsschrauben 14 mit der Wellenhülse 13 verbundenen Halter 12 übertragen werden. Der Halter 12 greift dabei an der Außenseite der Bandage 15 an und überträgt ein Drehmoment auf den rotierenden Gleitring 2. Der Halter 12 übergreift die Bandage dabei in Axialrichtung X-X teilweise.

Der stationäre Gleitring 3 ist über einen Haltering 5 mit einem einteiligen Gehäuse 6 verbunden. Wie aus Fig. 1 ersichtlich ist, übergreift der Haltering 5 dabei den stationären Gleitring 3 in axialer Richtung X-X der Gleitringdichtungsanordnung.

Zwischen dem Haltering 5 und dem Gehäuse 6 ist dabei eine Klemmverbindung 7 ausgebildet. Die Klemmverbindung 7 ist in diesem Ausführungsbeispiel mittels eines Klemmbauteils 8 ausgebildet, welches in diesem Ausführungsbeispiel eine Senkkopfschraube ist. Hierbei sind auf einem Durchmesser am Gehäuse 6 eine Vielzahl von Klemmbauteilen 8 vorgesehen. Zum Klemmen weist das Klemmbauteil 8 einen Kopf 80 und einen an der Unterseite des Kopfs angeordneten Konus 81 auf. Weiterhin weist das Gehäuse 6 einen ersten konischen Bereich 71 und der Haltering 5 einen zweiten konischen Bereich 72 auf. Der Konus 81 des Klemmbauteils 8 befindet sich dabei mit dem ersten und zweiten konischen Bereich 71, 72 in Kontakt und verbindet über eine dadurch aufgebrachte Klemmkraft das Gehäuse 6 mit dem Haltering 5.

Wie aus Fig. 1 ersichtlich ist, ist die Klemmverbindung 7 dabei an einer Stirnseite 61 des Gehäuses 6 angeordnet. Dadurch ergibt sich eine leichte Zugänglichkeit der Klemmverbindung, so dass die Klemmverbindung schnell und einfach ausgeführt bzw. wieder gelöst werden kann.

Wie weiter aus Fig. 1 ersichtlich ist, weist der Haltering 5 einen Fortsatz 51 auf, an welchem der zweite konische Bereich 72 ausgebildet ist. Dadurch wird die Klemmverbindung 7 radial nach außen versetzt, so dass eine leichte Zugänglichkeit weiter verbessert wird.

Wie aus Fig. 1 ersichtlich ist, ist das Gehäuse 6 einteilig ausgebildet und es müssen außer den axialen Bohrungen zur Aufnahme der Klemmbauteile 8 keinerlei weitere Bohrungen vorgesehen werden, welche Gehäuseteile oder dgl. miteinander verbinden müssten. Dadurch können Leitungen, wie beispielsweise eine Medienleitung 11, beliebig im Gehäuse 6 positioniert werden. Die Medienleitung 11 dieses Ausführungsbeispiels dient zum Zuführen eines Sperrmediums zur Innenseite der Gleitringdichtung, was durch die Pfeile A und B angedeutet ist. Die Gleitringdichtungsanordnung 1 dichtet dabei einen Produktbereich 20 von der Umgebung ab.

Ferner weist das Gehäuse 6 eine Anlagefläche 60 auf, an welcher der Haltering 5 anliegt. Durch den am Haltering 5 vorgesehenen Fortsatz 51 kann dabei zwischen dem Haltering 5 und dem Gehäuse 6 ein umlaufender Fluidkanal 9 ausgebildet werden. Der Fluidkanal 9 weist in diesem Ausführungsbeispiel einen rechteckigen Querschnitt auf und ist ringförmig an der äußeren Mantelfläche des Halterings 5 vorgesehen. Erste und zweite O-Ringe 22, 23 dienen dabei zur Abdichtung des Fluidkanals 9. Weiterhin ist im Haltering 5 wenigstens ein Verbindungskanal 10 ausgebildet, welcher den Fluidkanal 9 mit dem Produktbereich 20 verbindet. Eine Mündung 10a des Verbindungskanals 10 ist dabei nahe am Dichtspalt 4 der Gleitringdichtungsanordnung. Hierdurch wird insbesondere ein Spülen der Gleitringdichtungsanordnung am radial äußeren Bereich der beiden Gleitringe 2, 3 ermöglicht.

Wie insbesondere aus Fig. 2 ersichtlich ist, weist der rotierende Gleitring 2 an einer Außenumfangsfläche genau eine Stufe 25 auf. Die Stufe 25 bildet dabei eine Anlagefläche 26, welche senkrecht zur Axialrichtung X-X angeordnet ist. Die Stufe 25 weist dabei eine Tiefe T auf. Durch das Vorsehen der Stufe 25 weist die Außenumfangsfläche des rotierenden Gleitrings somit einen größten Durchmesser D1 und einen kleinsten Durchmesser D2 auf. Erfindungsgemäß ist nun die Bandage 15 am kleinsten Durchmesser angeordnet, wobei die Bandage 15 so auf dem kleinsten Durchmesser D2 des rotierenden Gleitrings 2 angeordnet ist, dass eine Stirnseite 17 der Bandage 15 an der Anlagefläche 26 der Stufe 25 anliegt.

Die Bandage 15 weist ferner eine breite Fase 16 an einer inneren Umfangskante auf, welche im Bereich der Stufe 25 liegt. Hierdurch wird vermieden, dass eine innere scharfe Kante der Bandage 15 den Gleitring beschädigt.

Die Bandage 15 ist mittels eines Schrumpfverfahrens auf dem rotierenden Gleitring 2 aufgebracht. Durch die Anlagefläche 26 im Bereich der Stufe 25 kann dabei während des Schrumpfvorgangs sichergestellt werden, dass die Bandage 15 exakt ihre vorgesehene Position am Außenumfang des rotierenden Gleitrings beibehält. Damit kann das im Stand der Technik vorkommende Problem eines Verschiebens der Bandage in Axialrichtung während des Schrumpfvorgangs vermieden werden. Auch kann eine schnelle und einfache Montage der Bandage 15 vor dem Schrumpfvorgang auf dem äußeren Umfang des rotierenden Gleitrings 2 vorgenommen werden, da die Bandage 15 lediglich bis zur Anlagefläche 26 aufgeschoben werden muss. Hierbei ist kein Nachmessen und nachträgliches korrigieren oder dgl. zur Einhaltung einer vorbestimmten Position der Bandage am Außenumfang des Gleitrings notwendig.

Die Bandage 15 weist ferner eine Dicke E in radialer Richtung auf, wobei die Dicke E der Bandage 15 mindestens gleich groß ist wie eine minimale Dicke F des rotierenden Gleitrings 2, in einem Bereich Y des Gleitrings, welcher von der Bandage 15 überdeckt wird.

Wie weiter aus Fig. 2 ersichtlich ist, ist die Bandage 15 derart am rotierenden Gleitring 2 angeordnet, dass ein Flächenschwerpunkt S des Gleitrings, welcher einen Schwerpunkt einer Schnittfläche des Gleitrings in Axialrichtung bildet, von der Bandage 15 überdeckt ist. Vorzugsweise ist die Bandage 15 mittig zum Flächenschwerpunkt S angeordnet.

Die Bandage 15 weist ferner vorzugsweise eine Breite in Axialrichtung X-X auf (in Fig. 2 durch den Bereich Y gekennzeichnet), welcher mindestens so groß ist wie eine Hälfte einer Breite Z des rotierenden Gleitrings 2 in Axialrichtung.

Weiter bevorzugt überdeckt der Halter 12 zumindest ein Drittel der Breite Y der Bandage 15. Der Halter 12 befindet sich dabei sowohl mit der Bandage 15 als auch mit dem größeren Durchmesser D1 des rotierenden Gleitrings 2 in Kontakt, um eine sichere Drehmomentübertragung zu ermöglichen.

Erfindungsgemäß kann somit sichergestellt werden, dass die Bandage 15 durch einen sehr einfachen und schnellen Montageschritt immer positionsgenau am Außenumfang des Gleitrings angeordnet wird. Auch nach dem Schrumpfvorgang kann auf einfache Weise überprüft werden, ob die Bandage 15 an exakt der vorbestimmten Position auf den Gleitring aufgeschrumpft wurde, da im Bereich der Anlagefläche 26 kein Spalt zwischen der Bandage 15 und dem Gleitring 2 vorhanden sein darf. Sollte ein Spalt vorhanden sein, ist unmittelbar erkennbar, dass die Bandage 15 nicht exakt positioniert ist und der Gleitring kann aussortiert werden.

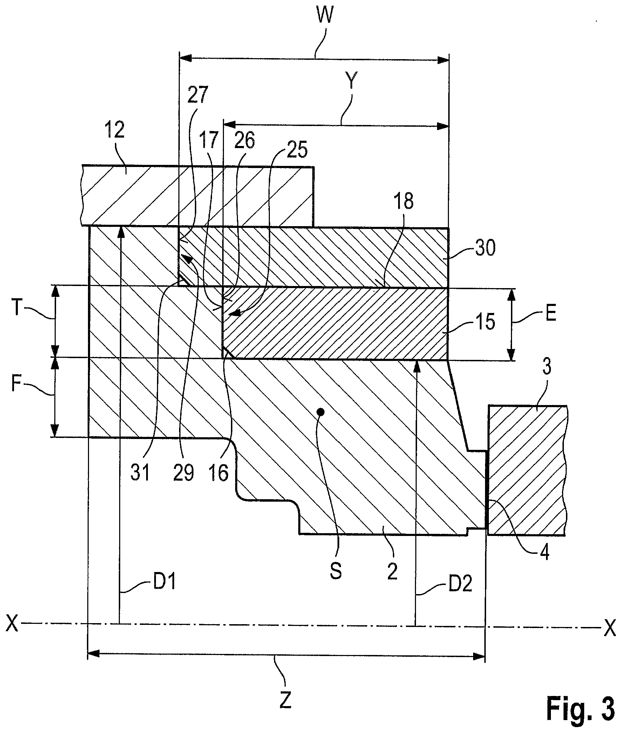

Fig. 3 zeigt eine Gleitringdichtungsanordnung gemäß einem zweiten Ausführungsbeispiel der Erfindung. Im Unterschied zum ersten Ausführungsbeispiel weist die Gleitringdichtungsanordnung des zweiten Ausführungsbeispiels eine erste Bandage 15 und eine zweite Bandage 30 auf. Die zweite Bandage 30 ist dabei radial außerhalb der ersten Bandage 15 angeordnet. Wie unmittelbar aus Fig. 3 ersichtlich ist, liegt die zweite Bandage 30 dabei an einer Außenmantelfläche 18 der ersten Bandage 15 an. Der Gleitring 2, welcher ebenfalls der rotierende Gleitring ist, weist ferner eine erste Stufe 25 mit einer ersten Anlagefläche 26 und eine zweite Stufe 29 mit einer zweiten Anlagefläche 27 auf. Im montierten Zustand liegt somit die erste Bandage 15 an der ersten Anlagefläche 26 und die zweite Bandage 30 an der zweiten Anlagefläche 27 an. Wie weiter aus Fig. 3 ersichtlich ist, weist die zweite Bandage 30 eine Breite W in Axialrichtung X-X auf, welche größer als eine Breite Y der ersten Bandage 15 ist. Dabei überdeckt die zweite Bandage 30 ferner die erste Bandage 15 vollständig. Somit schützt die zweite Bandage die erste Bandage, beispielsweise gegen aggressive Einflüsse eines abzudichtenden Mediums. Zur Vermeidung von Beschädigungen weist die zweite Bandage 30 ebenfalls eine breite Fase 31 zur Vermeidung von Beschädigungen des Gleitrings 2 auf.

Ferner übergreift der Halter 12 die zweite Bandage 30 teilweise. Das Drehmoment kann somit über die zweite Bandage 30 und die erste Bandage 15 auf den Gleitring 2 übertragen werden. Vorzugsweise übergreift der Halter 12 dabei mindestens die Hälfte der Breite W der zweiten Bandage 30.

Die Verwendung von zwei Bandagen 15, 30 am Gleitring 2 ermöglicht es somit, dass beide Bandagen hinsichtlich unterschiedlicher Eigenschaften ausgelegt werden können. Durch das Vorsehen der beiden Stufen mit den beiden Anlageflächen 26, 27 können somit beide Bandagen 15, 30 sicher und genau positioniert werden. Die Montage der beiden Bandagen 15, 30 kann dabei sowohl gleichzeitig als auch nacheinander erfolgen.

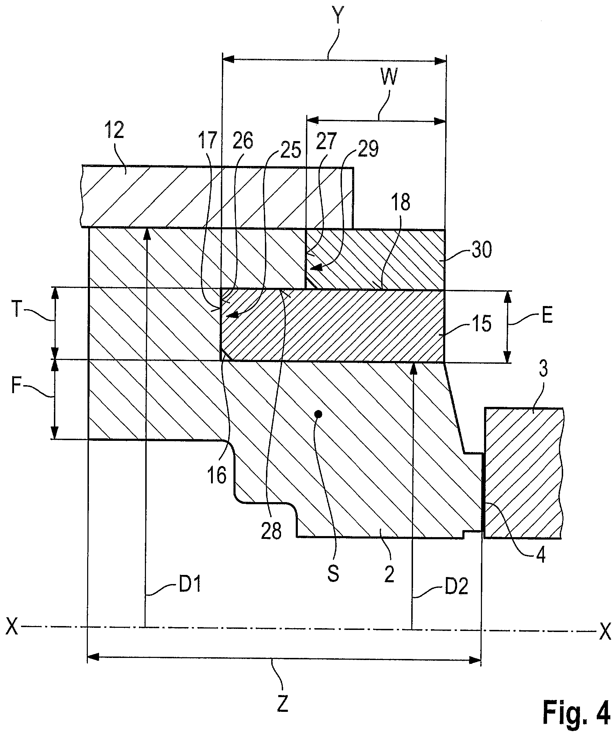

Fig. 4 zeigt eine Gleitringdichtungsanordnung gemäß einem dritten Ausführungsbeispiel der Erfindung. Das dritte Ausführungsbeispiel entspricht im Wesentlichen dem zweiten Ausführungsbeispiel und umfasst ebenfalls zwei Bandagen 15, 30. Im Unterschied zum zweiten Ausführungsbeispiel ist beim dritten Ausführungsbeispiel jedoch eine nutförmige Vertiefung 28 im Gleitring 2 ausgebildet. Die nutförmige Vertiefung 28 ist in axialer Richtung X-X in Richtung des stationären Gleitrings 3 geöffnet. Die nutförmige Vertiefung 28 nimmt dabei die erste Bandage 15 zumindest teilweise auf. Insbesondere in Verbindung mit dem Halter 12 kann durch diese Ausgestaltung der Gleitringdichtungsanordnung die erste Bandage 15 besonders sicher am rotierenden Gleitring 2 gehalten werden. Die zweite Bandage 30 weist dabei eine Breite W in Axialrichtung X-X auf, welche kleiner als eine Breite Y der ersten Bandage 15 ist. Eine Dicke der beiden Bandagen ist vorzugsweise gleich.

Die in den Fig. 3 und 4 beschriebenen Ausführungsbeispiele mit genau zwei Bandagen 15, 30 ermöglichen es somit, dass jede Bandage hinsichtlich ihrer gewünschten Eigenschaften exakt ausgelegt werden kann. Beispielsweise kann die äußere, zweite Bandage 30 eine höhere chemische Beständigkeit als die innere, erste Bandage 15 aufweisen. Die Materialwahl für die zweite Bandage 30 wird dabei in Abhängigkeit einer chemischen Aggressivität des abzudichtenden Mediums gewählt.

### Bezugszeichenliste

- 1: Gleitringdichtungsanordnung
- 2: rotierender Gleitring
- 3: stationärer Gleitring
- 4: Dichtspalt
- 5: Haltering
- 6: Gehäuse
- 7: Klemmverbindung
- 8: Klemmbauteil
- 9: Fluidkanal
- 10: Verbindungskanal
- 10a: Mündung des Verbindungskanals 10
- 11: Medienkanal
- 12: Halter
- 13: Wellenhülse
- 14: Verbindungsschrauben
- 15: Bandage
- 16: Fase
- 17: Stirnseite der Bandage
- 18: Außenmantelfläche der ersten Bandage
- 20: Produktbereich
- 22,23: O-Ringe
- 25: Stufe
- 26: Anlagefläche am rotierenden Gleitring
- 27: zweite Anlagefläche
- 28: nutförmige Vertiefung
- 29: zweite Stufe
- 30: zweite Bandage
- 31: Fase
- 51: Fortsatz
- 60: Anlagefläche am Gehäuse
- 61: Stirnseite des Gehäuses
- 71: erster konischer Bereich
- 72: zweiter konischer Bereich
- 80: Kopf
- 81: Konus
- A, B: Pfeile
- D1: größter Durchmesser am Außenmantel des rotierenden Gleitrings
- D2: kleinster Durchmesser am Außenmantel des rotierenden Gleitrings
- E: Dicke der Bandage
- F: minimale Dicke des rotierenden Gleitrings im Bereich der Bandage
- T: Tiefe der Stufe
- W: Breite der zweiten Bandage
- X-X: Axialrichtung
- Y: Breite der Bandage
- Z: Breite des Gleitrings

## Patentansprüche

1. Gleitringdichtungsanordnung umfassend:
- einen rotierenden Gleitring (2) und einen stationären Gleitring (3), welche zwischen sich einen Dichtspalt (4) begrenzen,
- eine Bandage (15), welche auf einer Außenmantelfläche wenigstens eines der Gleitringe angeordnet ist,
- **dadurch gekennzeichnet, dass** der Gleitring (2), an welchem die Bandage (15) angeordnet ist, an der Außenmantelfläche eine vollständig in Umfangsrichtung umlaufende Stufe (25) mit einer Anlagefläche (26) aufweist, und
- dass die Bandage (15) mit einer Stirnseite (17) an der Anlagefläche (26) der Stufe (25) anliegt.

2. Gleitringdichtungsanordnung nach einem der vorhergehenden Ansprüche, **dadurch gekennzeichnet, dass** die Bandage (15) an der ersten Stirnfläche (17) eine Fase (16) am radial inneren Umfang aufweist.

3. Gleitringdichtungsanordnung nach einem der vorhergehenden Ansprüche, **dadurch gekennzeichnet, dass** die Bandage (15) am rotierenden Gleitring (2) angeordnet ist.

4. Gleitringdichtungsanordnung nach einem der vorhergehenden Ansprüche, **dadurch gekennzeichnet, dass** ein Halter (12) die Bandage (15) zumindest teilweise übergreift.

5. Gleitringdichtungsanordnung nach einem der vorhergehenden Ansprüche, **dadurch gekennzeichnet, dass** eine Breite (Y) der Bandage (15) in Axialrichtung (X-X) mindestens so groß ist wie eine Hälfte einer Breite (Z) des Gleitrings (2) in Axialrichtung (X-X).

6. Gleitringdichtungsanordnung nach einem der vorhergehenden Ansprüche, **dadurch gekennzeichnet, dass** eine minimale Dicke (F) des Gleitrings (2) im Bereich der Bandage (15) mindestens so groß ist wie eine Dicke (E) der Bandage.

7. Gleitringdichtungsanordnung nach einem der vorhergehenden Ansprüche, **dadurch gekennzeichnet, dass** die Anlagefläche (26) senkrecht zur Axialrichtung (X-X) der Gleitringdichtungsanordnung verläuft.

8. Gleitringdichtungsanordnung nach einem der vorangehenden Ansprüche, **dadurch gekennzeichnet, dass** eine Dicke (E) der Bandage (15) größer oder gleich einer Tiefe (T) der Stufe (25) des Gleitrings ist.

9. Gleitringdichtungsanordnung nach einem der vorhergehenden Ansprüche, **dadurch gekennzeichnet, dass** der Gleitring genau eine Stufe (25) an der Außenmantelfläche aufweist.

10. Gleitringdichtungsanordnung nach einem der Ansprüche 1 bis 9, umfassend eine erste Bandage (15) und eine zweite Bandage (30), welche an einer Außenmantelfläche (18) der ersten Bandage (15) angeordnet ist.

11. Gleitringdichtungsanordnung nach Anspruch 10, **dadurch gekennzeichnet, dass** der rotierende Gleitring (2) eine erste Anlagefläche (26), an welcher die erste Bandage (15) anliegt, und eine zweite Anlagefläche (27), an welcher die zweite Bandage (30) anliegt, aufweist.

12. Gleitringdichtungsanordnung nach Anspruch 10 oder 11, **dadurch gekennzeichnet, dass** die zweite Bandage (30) die erste Bandage (15) vollständig überdeckt.

13. Gleitringdichtungsanordnung nach Anspruch 10 oder 11, **dadurch gekennzeichnet, dass** der Gleitring (2) eine nutförmige Vertiefung (28) aufweist, in welcher die erste Bandage (15) zumindest teilweise angeordnet ist.

## Claims

1. Mechanical seal arrangement comprising:
- a rotating slide ring (2) and a stationary slide ring (3) which define a sealing gap (4) between them,
- a bandage (15) which is arranged on the outer surface of at least one of the slide rings,
- **characterized in that** the slide ring (2) on which the bandage (15) is arranged comprises a step (25), which extends completely on the outer circumferential face in the circumferential direction and has a contact face (26), and
- that an end face (17) of the bandage (15) lies against the contact face (26) of the step (25).

2. Mechanical seal arrangement as claimed in any one of the preceding claims, **characterized in that** the bandage (15) has a bevel (16) on the radially inner circumference on the first end face (17).

3. Mechanical seal arrangement as claimed in any one of the preceding claims, **characterized in that** the bandage (15) is arranged on the rotating slide ring (2).

4. Mechanical seal arrangement as claimed in any one of the preceding claims, **characterized in that** a holder (12) engages around the bandage (15) at least in part.

5. Mechanical seal arrangement as claimed in any one of the preceding claims, **characterized in that** the width (Y) of the bandage (15) in the axial direction (X-X) is at least as large as half the width (Z) of the slide ring (2) in the axial direction (X-X).

6. Mechanical seal arrangement as claimed in any one of the preceding claims, **characterized in that** the minimum thickness (F) of the slide ring (2) in the region of the bandage (15) is at least as large as the thickness (E) of the bandage.

7. Mechanical seal arrangement as claimed in any one of the preceding claims, **characterized in that** the stop face (26) extends perpendicular to the axial direction (X-X) of the slide ring arrangement.

8. Mechanical seal arrangement as claimed in any one of the preceding claims, **characterized in that** the thickness (E) of the bandage is greater than or equal to the depth (T) of the step (25) of the slide ring.

9. Mechanical seal arrangement as claimed in any one of the preceding claims, **characterized in that** the slide ring has exactly one step (25) on the outer surface.

10. Mechanical seal arrangement as claimed in any one of claims 1 to 9, comprising a first bandage (15) and a second bandage (30) which is arranged on the outer surface (18) of the first bandage (15).

11. Mechanical seal arrangement as claimed in claim 10, **characterized in that** the rotating slide ring (2) has a first contact face (26) against which the first bandage (15) lies and a second contact face (27) against which the second bandage (30) lies.

12. Mechanical seal arrangement as claimed in claim 10 or 11, **characterized in that** the second bandage (30) completely covers the first bandage (15).

13. Mechanical seal arrangement as claimed in claim 10 or 11, **characterized in that** the slide ring (2) has a groove-shaped depression (28), in which the first bandage (15) is arranged at least in part.

## Revendications

1. Ensemble de joints d'étanchéité à bagues de glissement, comprenant :
- une bague de glissement (2) rotative et une bague de glissement (3) stationnaire, lesquelles délimitent entre elles une fente d'étanchéité (4),
- un bandage (15), qui est disposé sur une surface enveloppante extérieure d'au moins une des bagues de glissement,
**caractérisé en ce que**
- la bague de glissement (2), au niveau de laquelle le bandage (15) est disposé, présente, au niveau de la surface enveloppante extérieure, un palier (25) s'étendant totalement dans la direction périphérique, avec une surface d'appui (26), et
- que le bandage (15) repose, par un côté frontal (17), au niveau de la surface d'appui (26) du palier (25).

2. Ensemble de joints d'étanchéité à bagues de glissement selon l'une quelconque des revendications précédentes, **caractérisé en ce que** le bandage (15) présente, au niveau de la première surface frontale (17), un chanfrein (16) au niveau de la périphérie radialement intérieure.

3. Ensemble de joints d'étanchéité à bagues de glissement selon l'une quelconque des revendications précédentes, **caractérisé en ce que** le bandage (15) est disposé au niveau de la bague de glissement (2) rotative.

4. Ensemble de joints d'étanchéité à bagues de glissement selon l'une quelconque des revendications précédentes, **caractérisé en ce qu'**un système de maintien (12) recouvre au moins en partie le bandage (15).

5. Ensemble de joints d'étanchéité à bagues de glissement selon l'une quelconque des revendications précédentes, **caractérisé en ce qu'**une largeur (Y) du bandage (15) est, dans la direction axiale (X-X), au moins aussi grande qu'une moitié d'une largeur (Z) de la bague de glissement (2) dans la direction axiale (X-X).

6. Ensemble de joints d'étanchéité à bagues de glissement selon l'une quelconque des revendications précédentes, **caractérisé en ce qu'**une épaisseur (F) minimale de la bague de glissement (2) est, dans la zone du bandage (15), au moins aussi grande qu'une épaisseur (E) du bandage.

7. Ensemble de joints d'étanchéité à bagues de glissement selon l'une quelconque des revendications précédentes, **caractérisé en ce que** la surface d'appui (26) s'étend de manière perpendiculaire par rapport à la direction axiale (X-X) de l'ensemble de joints d'étanchéité à bagues de glissement.

8. Ensemble de joints d'étanchéité à bagues de glissement selon l'une quelconque des revendications précédentes, **caractérisé en ce qu'**une épaisseur (E) du bandage (15) est plus grande qu'une profondeur (T) ou égale à une profondeur du palier (25) de la bague de glissement.

9. Ensemble de joints d'étanchéité à bagues de glissement selon l'une quelconque des revendications précédentes, **caractérisé en ce que** la bague de glissement présente précisément un palier (25) au niveau de la surface enveloppante extérieure.

10. Ensemble de joints d'étanchéité à bagues de glissement selon l'une quelconque des revendications 1 à 9, comprenant un premier bandage (15) et un deuxième bandage (30), qui est disposé au niveau d'une surface enveloppante extérieure (18) du premier bandage (15).

11. Ensemble de joints d'étanchéité à bagues de glissement selon la revendication 10, **caractérisé en ce que** la bague de glissement (2) rotative présente une première surface d'appui (26), au niveau de laquelle le premier bandage (15) repose, et une deuxième surface d'appui (27), au niveau de laquelle le deuxième bandage (30) repose.

12. Ensemble de joints d'étanchéité à bagues de glissement selon la revendication 10 ou 11, **caractérisé en ce que** le deuxième bandage (30) recouvrement totalement le premier bandage (15).

13. Ensemble de joints d'étanchéité à bagues de glissement selon la revendication 10 ou 11, **caractérisé en ce que** la bague de glissement (2) présente un renfoncement (28) présentant une forme de rainure, dans lequel le premier bandage (15) est disposé au moins en partie.
